# EUROPEAN PATENT APPLICATION

(11) **EP 1 475 488 A1**
(43) Date of publication of application: **10.11.2004**
(21) Application number: 03394084.2
(22) Date of filing: 12.09.2003
(51) Int. Cl.: E04C 2/04, B32B 27/12, B32B 13/14, B29C 70/00

(54) **Facing sheet of open mesh scrim and polymer film for cement boards**

(30) Priority: 08.05.2003 US 434003
(71) Applicant: TechFab, LLC, Anderson, South California 29622 (US)
(72) Inventor: Broadway, Andrew, Anderson, South Carolina 29622 (US)
(74) Representative: Coyle, Philip Aidan

(57) **Abstract**

There is provided a facing sheet (10) for cement boards comprising a scrim (12) and polymer film (14). The scrim (12) has a plurality of intersecting yarns (16) defining an open mesh pattern with an inner face defining a grid profile for mechanical interaction with the cementitious composition of the cement board. The polymer film (14) is joined to an outer face of the scrim (12) and defines a repeating pattern of openings (34). The polymer film (14) facilitates the mechanical interaction between the grid profile of the scrim (12) and the cementitious composition and allows the passage of moisture from the cementitious composition during hardening of the cement board. The scrim (12) may include glass fibers yarns (16,18) and the polymer film (14) may be formed by a gravure rolling process. A cement board may include a second facing sheet on a surface opposite the first facing sheet.

## Description

### FIELD OF THE INVENTION

The present invention relates generally to facing sheets for cement board products. More particularly the invention relates to facing sheets that include an open mesh scrim joined with a polymer film that has a repeating pattern of openings such that the polymer film facilitates the mechanical interaction of the scrim and the cementitious composition.

### BACKGROUND OF THE INVENTION

Cement boards and other types of construction boards are used in a variety of structural applications. Cement boards are used as a support surface for overlying materials such as tile, brick, stucco, wood siding, marble, and the like. Cement boards are also used in exterior insulating systems, commercial roof deck systems, and exterior curtain walls. Cement boards typically include a core of cementitious composition interposed between facing sheets. The facing sheets provide flexural and impact strength to the cementitious core that typically consists of a brittle material with high compressive strength. The facing sheets may also provide a durable protective layer or other desirable surface properties to the cementitious core.

Facing sheets can include multiple layers to achieve the desired structural properties and surface properties for the particular cement board. U.S. Patent No. 4,504,533 to Altenhöfer et al. discloses a gypsum construction board with a two-layer facing sheet comprising a glass fiber web and a fiberglass non-woven layer that are adhered together. The glass fiber web is embedded in the gypsum core, yet the fiberglass non-woven layer prevents or hinders the passage of gypsum through the non-woven layer, though the gypsum may penetrate slightly into the non-woven layer. The fiberglass non-woven layer may include materials such as mineral fibers, glass fibers, or cellulose fibers. However, such an exterior surface may provide inadequate or undesirable surface properties.

An alternative facing sheet may include an outer layer that facilitates the interaction of the core material with the inner layer of the facing sheet. U.S. Patent No. 6,054,205 to Newman et al., discloses a facing sheet that includes a glass fiber scrim with a layer of melt blown polymer applied to the surface of the scrim opposite the cementitious core. The glass fiber scrim is integrated into the cementitious core during the manufacturing process to increase the bond strength between the cementitious core and the facing sheet. The melt blown polymer improves the outer surface of the cement board by increasing the distribution of the cementitious composition within the mesh of the scrim, thus reducing pits in the outer surface.

Melt blowing hot polymer onto a scrim can be a costly and complex manufacturing process. Melt blown processes often require expensive equipment and may also require time-intensive production cycles. Furthermore, achieving a repeatable and uniform surface quality with a melt blown process can be challenging. Therefore, a need exists for a cement board facing sheet that provides desirable surface properties and that is economically, conveniently, and consistently manufactured.

### BRIEF SUMMARY OF THE INVENTION

The invention addresses the above needs and achieves other advantages by providing a facing sheet for objects comprising a hardened cementitious composition. The facing sheet includes a scrim and a polymer film. The scrim has a plurality of intersecting yarns that define an open mesh pattern. The scrim also has an inner face and an outer face, such that the inner face of the scrim defines a grid profile for mechanical interaction with the cementitious composition. The polymer film defines a repeating pattern of openings. The polymer film is joined with the outer face of the scrim, and when the facing sheet is applied to the cementitious composition, the polymer film facilitates mechanical interaction between the scrim and the cementitious composition as the cementitious composition hardens.

One embodiment of the facing sheet includes a scrim comprising yarns of glass fiber that are joined at their crossover points with a polymeric binder. The scrim can have less than 155,000 mesh openings per square meter. The polymer film of the facing sheet can comprise a thermoplastic material or a thermoset polymer and can be a gravure printed film. The polymer film can be joined to the scrim to form the facing sheet prior to the application of the facing sheet to the cementitious composition. The facing sheet could alternatively, however, have the polymer film joined to the scrim during the mechanical integration of the cementitious composition and the scrim.

A cement board is also provided, wherein the cement board has a cementitious core and a facing sheet comprising a scrim and a polymer film. The scrim has a plurality of intersecting yarns defining an open mesh pattern and the polymer film defines a repeating pattern of openings. The polymer film is joined to an outer face of the scrim and the cementitious composition of the cement board core is mechanically integrated to an inner face of the scrim. The polymer film facilitates the mechanical interaction between the scrim and the cementitious composition. The cement board can also include a second facing sheet that is similar to the first facing sheet and is applied to a surface opposite the first facing sheet.

A method for manufacturing a facing sheet for objects comprising a hardened cementitious composition is also provided. A plurality of intersecting yarns are joined to create a scrim defining an open mesh pattern that has an inner face and an outer face. A polymer film is formed to define a repeating pattern of openings. The polymer film is joined to the outer face of the scrim to define the facing sheet. The inner face of the scrim defines a grid profile for mechanical interaction with the cementitious composition.

The method can include the joining of the intersecting yarns with a polymer binder at the crossover points of the intersecting yarns. In addition, the forming of the polymer film can be by a gravure rolling process, wherein a heated polymer is gravure rolled to create the polymer film. The method of manufacturing can also include the transfer of the polymer film from the gravure rolling process onto an intermediate surface and the transfer of the polymer film from the intermediate surface to the scrim. Other methods of manufacturing a facing sheet for objects comprising a hardened cementitious composition are described herein.

### BRIEF DESCRIPTION OF THE SEVERAL VIEWS OF THE DRAWINGS

Having thus described the invention in general terms, reference will now be made to the accompanying drawings, which are not necessarily drawn to scale, and wherein:
**FIG. 1** is a perspective view of a facing sheet comprising a polymer film and a glass fiber scrim;
**FIG. 2** is an enlarged, top view of the facing sheet of **FIG. 1**;
**FIG. 3** is a perspective view of a cement board including-the facing sheet of **FIG. 1;**
**FIG. 4** is a sectional view of the cement board of **FIG. 3** along the line **4-4**;
**FIG. 5** is a perspective view illustrating a first method of joining a polymer film formed by gravure rolling to a scrim of glass fiber to form a facing sheet of the present invention;
**FIG. 6** is a perspective view, similar to **FIG. 5**, illustrating a second method of joining a polymer film formed by gravure rolling to a scrim of glass fiber to form a facing sheet of the present invention; and
**FIG. 7** is a side view illustrating a method of manufacturing a cement board by separately advancing the scrim and the polymer film.

### DETAILED DESCRIPTION OF THE INVENTION

The present invention now will be described more fully hereinafter with reference to the accompanying drawings, in which some, but not all embodiments of the invention are shown. Indeed, the invention may be embodied in many different forms and should not be construed as limited to the embodiments set forth herein; rather, these embodiments are provided so that this disclosure will satisfy applicable legal requirements. Like numbers refer to like elements throughout.

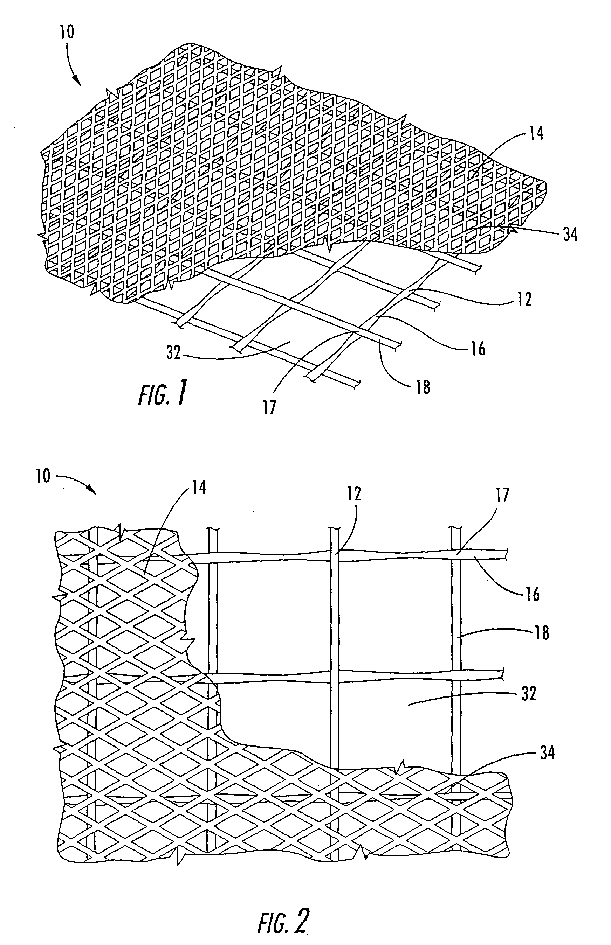

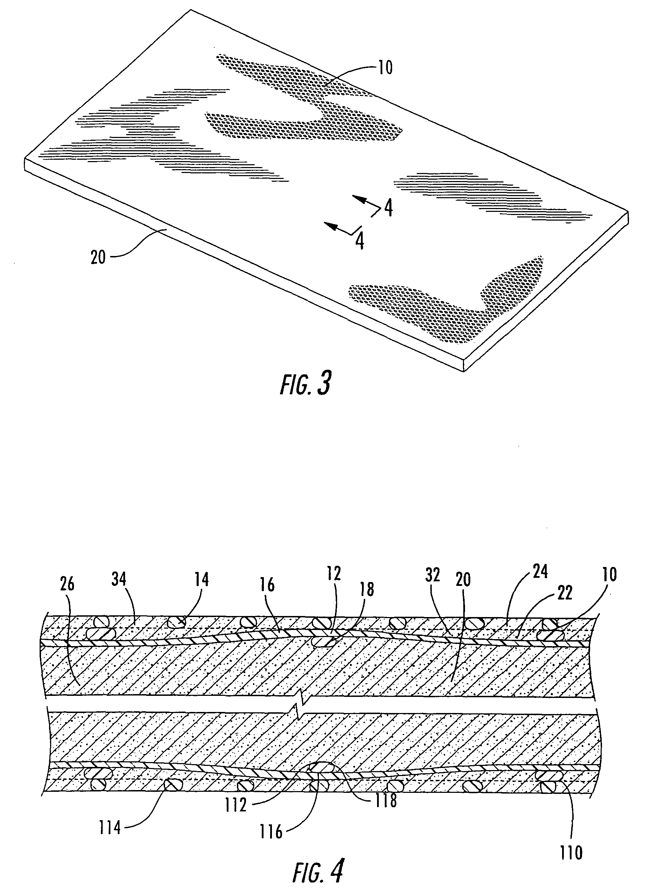

**FIG. 1** illustrates a facing sheet **10** formed by a scrim **12** joined to a polymer film **14**. The scrim **12** of **FIG. 1** and **FIG. 2** comprises an open mesh scrim formed by a plurality of intersecting, continuous multifilament, yarns **16** and **18** that are joined at their crossover points **17** and that define mesh openings **32**. The polymer film **14** comprises a layer of polymer with a repeating pattern of openings **34**. The polymer film **14** and the scrim **12** are joined together to form a facing sheet **10** for a cement board **20**, as shown in **FIG. 3**.

The scrim **12**, as shown in **FIG. 2**, is formed by a plurality of longitudinal yarns **18** and a plurality of transverse yarns **16** that are transverse to the longitudinal yarns. A scrim **12** of glass fiber yarns **16** and **18** is disclosed in U.S. Patent No. 6,054,205 to Newman et al., the disclosure of which is incorporated herein. The longitudinal yarns **18** of the scrim **12** of **FIG. 2** are disposed above or below the transverse yarns **16** in an alternating pattern, such that a crossover point **17** is created at each intersection of a longitudinal yarn and a transverse yarn. The yarns **16** and **18** of **FIG. 1** are glass fibers; however, the scrim 10 may alternatively include yarns of various materials, non-limiting examples being carbon fiber, aramid fiber, polymer fiber, and PVA fiber, or the scrim may include a combination of yarn types.

The glass fiber yarns **16** and **18** of **FIG. 2** of the scrim **12** are oriented in a perpendicular fashion such that the transverse yarns are angled 90 degrees relative to the longitudinal yarns. Furthermore, the transverse yarns **16** are parallel to one another and the longitudinal yarns **18** are also parallel to one another. The facing sheet **10** may alternatively include yarns in a 0/60/120 degree orientation and/or may include additional sets of yarns such that the mesh openings **32** define equilateral triangles or polygons.

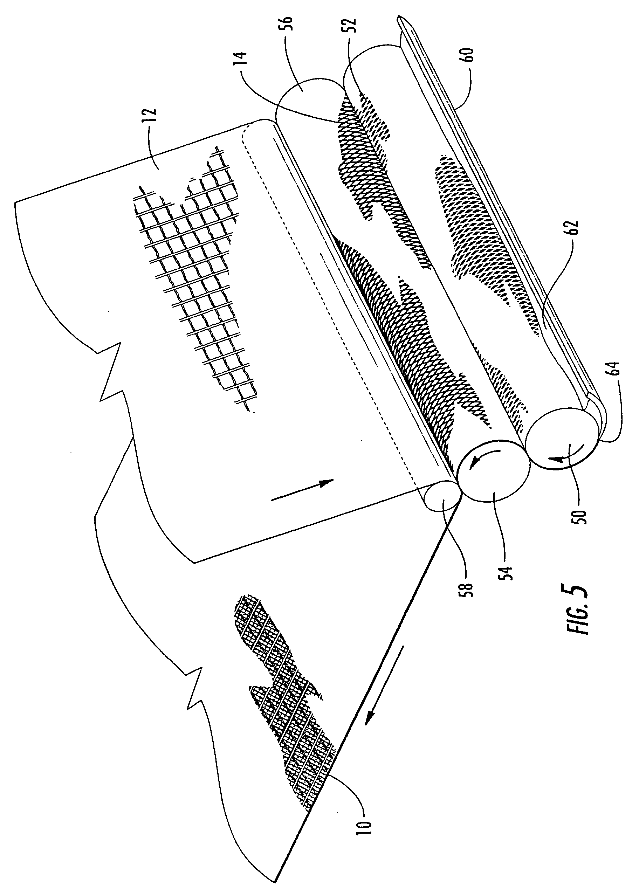

The number of transverse yarns **16** and longitudinal yarns **18** of the scrim **12** may be defined by the number of mesh openings **32** of the scrim. The scrim **12** of **FIG. 1** has less than about 100 mesh openings per square inch (i.e., a pick count less than 10 by 10) or 155,000 mesh openings per square meter. Alternatively, the scrim **12** may have less than 70 mesh openings per square inch, or approximately 108,500 mesh openings per square meter or even less than 50 mesh openings per square inch, or approximately 77,500 mesh openings per square meter. Generally, the individual yarns **16** and **18** used to form the scrim can have a size ranging from about 900 yds/lb, or 1,800 m/kg, to about 9,000 yds/lb, or 18,000 m/kg. In addition, the cross-sectional shape of the yarns **16** and **18** may include flat and curved surfaces, as shown in **FIG. 4**, or alternatively may be circular, elliptical, or polygonal to list a few non-limiting examples of shapes.

The scrim **12** of **FIG. 2** includes glass fiber yarns **16** and **18** joined at their crossover points **17** to provide dimensional stability for the scrim. This dimensional stability of the scrim **12** provides further dimensional stability and reinforcement to the subsequently manufactured cement board **20** to which the scrim is applied. The crossover points **17** of the scrim **12** of **FIG. 2** may be bonded with a polymer binder, such as polyvinyl chloride (PVC) applied as a plastisol, though the polymer binder can be any bonding material. Alternatively, the yarns **16** and **18** may be joined without the use of bonding materials, suchas weaving the yarns into a woven scrim, to name one non-limiting example. The scrim **12** may also include an alkali and moisture resistant thermoplastic or thermosetting polymer coating that prevents chemical interaction between the cementitious composition **26** of the cement board **20** and the glass fiber yarns **16** and **18** once the scrim is applied to the cementitious composition as illustrated in **FIG. 4**. The scrim **12** may alternatively include additional manufacturing techniques or materials to bond or coat the yarns **16** and **18**.

The scrim **12** of **FIG. 1** has an inner face and an outer face. The inner face of the scrim **12** defines a grid profile for mechanical interaction with the cementitious composition **26**, as shown in **FIG. 4**. The grid profile defines mesh openings **32** into which the cementitious composition **26** flows and contacts the edges of the grid profile during the manufacture of the cement board **20**. Such mechanical interaction between the cementitious composition **26** and the scrim **12** increases the bond strength between the two and thus increases the overall strength of the cement board **20** after hardening. The outer face of the scrim **12** is on a side opposite the inner face and defines a surface to which a polymer film **14** is joined, such that the polymer film facilitates the mechanical interaction between the cementitious composition and the scrim.

The polymer film **14**, of the facing sheet **10** shown in **FIG. 1** and **FIG. 2**, comprises a layer of gravure rolled polymer with a repeating pattern of openings **34**. The facing sheet **10**, may alternatively include a polymer film **14** with a repeating pattern of openings **34** manufactured by other methods, such as transfer coating, film slitting, extrusion process, tentered film, or apertured film (heated needles, die punched, etc.). The illustrated polymer film **14** is a polymer netting that includes lines oriented in a +/- 45 degree configuration that defines a repeating pattern of quadrilateral shaped openings **34**. Distances between the lines of the polymer film **14** that define an opening **34** range from 1 mm to 12 mm; however, the polymer film may alternatively include lines separated by a distance of less than 1 mm. Furthermore, the polymer film **14** may define a repeating pattern of any shaped openings **34** located at any relative distances and do not necessarily require lines to separate the openings. The basis weight of the polymer film **14** of **FIG. 1** is approximately 35 grams per square meter, though the basis weight of alternative polymer films may vary from 10 to 60 g/m². The thickness of the polymer film **14** of **FIG. 4** is approximately equivalent to the width of the netting lines of the polymer film. Alternatively, the polymer film **14** may be of any thickness relative to the size of the material separating the openings **34**.

The polymer film **14** is joined to the outer face of the scrim **12** and defines the outer surface of the facing sheet **10**. To provide a rigid and durable outer surface for the cement board **20**, the polymer film **14** of **FIG. 1** is a thermoplastic material or a thermoset polymer. The illustrated polymer film **14** is made from a polyester hot melt polymer, which provides thermal stability and the ability to retain mechanical properties at relatively high temperatures. However, any polymer material may be used to manufacture polymer film **14**. Because the polymer film **14** defines the outer surface of the cement board **20**, the polymer provides desirable surface qualities such as a semi-smooth board surface and the ability to be coated or painted.

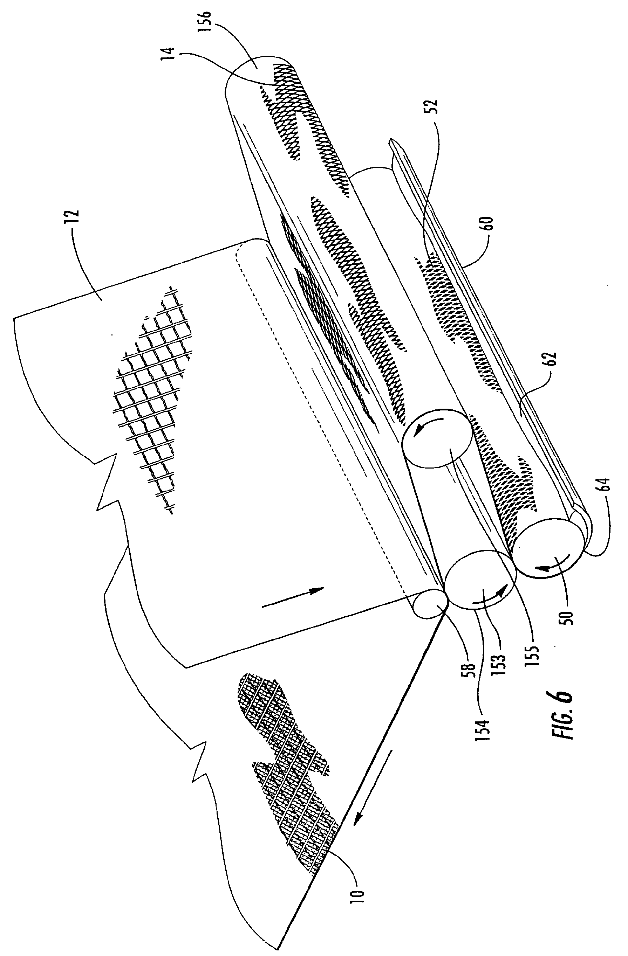

The polymer film **14** of **FIG. 5** and **FIG. 6** is a gravure printed film manufactured using a gravure rolled process. The polymer material may be transferred to the manufacturing facility in pellet form and then heated to form a heated polymer **62**, though other methods of providing a heated polymer may be utilized. The polymer is heated to a temperature such that the heated polymer **62** can be gravure rolled. The heated polymer **62** is transported to a position adjacent the gravure roller **50** and is collected between a dam **60** and the gravure roller, as shown in **FIG. 5** and **FIG. 6**. The dam **60** includes end walls, which are not illustrated, to confine the heated polymer **62** such that the heated polymer may be removed primarily by the gravure rolling process. The lower portion of the dam **60** includes a doctor blade **64** that meters out the heated polymer **62** onto the gravure roller **50** such that the polymer film **14** has a generally constant thickness. The gravure roller **50** is a circular roller of a given radius that includes a plurality of protrusions **52** that extend an equivalent distance in the radial direction.

To form the polymer film **14**, the gravure roller **50** is rotated downward on the side facing the dam **60** as shown in **FIG. 5** and **FIG. 6**. The outer surface of the protrusions **52** contact the doctor blade **64** of dam **60** during the rotation of the gravure roller **50**. The heated polymer **62** in dam **60** engages all the exterior surfaces of the rotating gravure roller **50** proximate the dam. However, as the gravure roller **50** rotates past the doctor blade **64** the heated polymer **62** contacting the outer surfaces of the protrusions **52** and the heated polymer located at a radial distance approximately equal to or greater than the radial distance of the outer surface of the protrusions is metered away and prevented from following the gravure roller beyond the doctor blade. The heated polymer **62** remaining in contact with the gravure roller **50** beyond the doctor blade **64** is a film of a relatively consistent thickness with voids occupied by the protrusions **52**. These voids become the openings **34** of the polymer film **14** after the film is removed from the gravure roller **50.** As the gravure roller **50** continues to rotate the film of heated polymer **62** cools to form the polymer film **14**.

As shown in **FIG. 5**, a transfer roller **54** is located proximate the gravure roller **50** and engages the polymer film **14** at the point where the two rollers are closest to each other. The transfer roller **54** of **FIG. 5**, as well as the transfer belt **154** of **FIG. 6,** functions as an intermediate surface for transferring the polymer film **14** from the gravure rolling process to the joining process of the polymer film and the scrim **12**. As shown in **FIG. 5**, the polymer film **14** is lifted from the gravure roller **50** and remains engaged to the transfer roller **54** because of the tangential force transmitted through the polymer film from the portion of the polymer film already engaging the transfer roller. The transfer roller **54** includes an outer surface **56** that engages the polymer film **14**. The outer surface **56** of **FIG. 5** is a smooth, non-stick surface such that when the polymer film **14** is joined to the scrim **12**, the polymer film separates easily from the transfer roller **54**. A temperature-controlled silicone roller is a non-limiting example of a non-stick transfer roller **54**. Therefore, the polymer film **14** remains in contact with the transfer roller **54** only along the arc from the point proximate the gravure roller **50** to the point proximate the scrim roller **58**.

Once the polymer film **14** is lifted from the gravure roller **50** onto the transfer roller **54**, the surface of the gravure roller along the arc between the transfer roller **54** and the dam **60** does not include a heated polymer **62** or a polymer film **14**. The exterior surface of the gravure roller **50** then submerges into the heated polymer **62** of the dam **60** again so that the heated polymer in the dam fully engages all the exterior surfaces of the gravure roller proximate the dam and the process is repeated.

As shown in **FIG. 6**, a polymer film **14** may be manufactured using a transfer belt **154** rather than the transfer roller **54** of **FIG. 5**. The transfer belt **154** includes a first roller **153** and a second roller **155** located a certain distance from the first roller. The transfer belt **154** also includes a belt disposed about the two rollers, wherein the belt has a surface **156** for engaging the polymer film **14**. The belt engages the first roller **153** and second roller **155** in a tight manner that prevents slippage of the belt relative to either roller and allows the two rollers to maintain a predetermined ratio of rotation speeds. Before the polymer film **14** is transferred to the transfer belt **154** of **FIG. 6**, the heated polymer **62** is fed on the gravure roller **50** through the doctor blade **64** and cools into a polymer film **14** in a similar fashion as occurs in the process of **FIG. 5**. By the time the polymer film **14** is rotated to the point of the gravure roller proximate the first roller **153** of the transfer belt **154**, the polymer film is sufficiently cooled such that tangential force sufficient to lift the polymer film off the gravure roller does not significantly stretch the polymer film. The cooled polymer film **14** is then lifted from the gravure roller **50** and remains engaged to the transfer belt **154** because of the tangential force transmitted through the polymer film from the portion of the polymer film already engaging the transfer belt. The outer surface **156** of the transfer belt **154** that engages the polymer film **14** of **FIG. 6** is a smooth, non-stick surface such that when the polymer film is joined to the scrim **12**, the polymer film separates easily from the transfer belt. A Teflon belt is a non-limiting example of a non-stick transfer belt **154**.

The polymer film **14** remains in contact with the transfer belt **154** along the path of the belt from the point proximate the gravure roller **50** to the point proximate the scrim roller **58**. One advantage of the transfer belt **154** of **FIG. 6** is the amount of time provided for cooling the polymer film **14** or for including additional process steps. A non-limiting example of an additional process step is the application of adhesive to the outwardly facing surface of a polymer film **14** that is subsequently joined to the scrim **12.** Further methods of transferring the polymer film **14** from the gravure roller **50** to a contact point proximate the scrim roller **58** are not illustrated but may include the use of release paper upon which the polymer film can be temporarily positioned for cooling and transport prior to joining the scrim **12** or may include the direct application of the polymer film from the gravure roller to the scrim, to list two non-limiting examples.

The polymer film **14** is joined to the outer face of the scrim **12** to define the facing sheet **10**. The polymer film **14** of **FIG. 5** and **FIG. 6** is joined to the scrim **12** with the application of heat and pressure such that the material properties of the polymer material are temporarily altered to join the scrim and polymer film. Such a method is illustrated in **FIG. 5** wherein the scrim **12** is fed around scrim roller **58** and the polymer film **14** is fed around intermediate roller **54**. Scrim roller **58** and intermediate roller **54** are positioned such that the scrim **12** contacts the polymer film **14** at the point where the two rollers are closest to each other. Either roller **58** or **54** may be heated and/or the rollers may be positioned such that pressure is exerted on the scrim **12** and polymer film **14** such that the heat and/or pressure causes the polymer film to be joined to the scrim. Likewise, the first roller **153** of **FIG. 6** that is proximate the scrim roller **58** may be heated and/or positioned such that pressure is exerted on the scrim **12** and polymer film **14** such that the heat and/or pressure causes the polymer film to be joined to the scrim. If the polymer film **14** retains a sufficient amount of heat or thermal energy from the gravure rolling process at the time the polymer film is joined with the scrim **12**, additional heat may not be necessary to join the polymer film and scrim.

Adhesives may alternatively be applied to the polymer film **14** to join the polymer film to the scrim **12**. After the polymer film **14** has been formed but before the polymer film is joined to the scrim **12**, an adhesive may be sprayed or coated directly onto the surface of the polymer film that is to be joined to the outer face of the scrim **12**. The adhesive, which may be an adhesive of a type typically used for non-woven materials, increases the thickness of the finished facing sheet **10** and improves the bond strength between the polymer film **14** and the scrim **12**. Further methods of joining the scrim **12** and polymer film **14** may also be utilized. Once the scrim **12** and polymer film **14** have been joined to form the facing sheet **10,** the facing sheet is transported away to be applied onto the cementitious composition or to be stored for subsequent use.

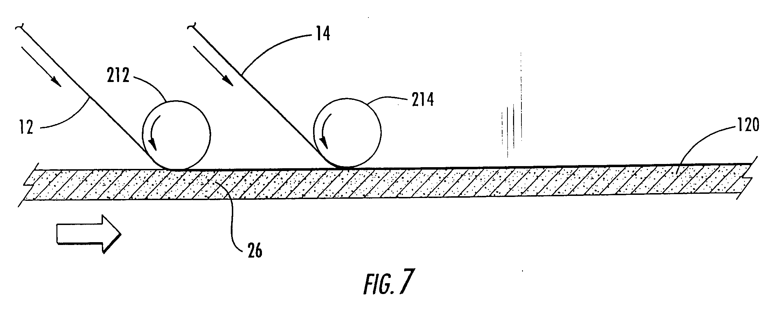

The scrim **12** and the polymer film **14** may also be fed separately to the cementitious composition **26** so that the polymer film and the scrim are applied adjacent to each other and may not permanently join each other until after the cementitious composition has hardened. **FIG. 7** illustrates a method of manufacturing a reinforced cement board **120** by advancing the scrim **12** to the cementitious composition **26**. A scrim roller **212** is located proximate a surface portion of the cementitious core such that as the scrim **12** is fed around the surface of the scrim roller, the scrim is applied to the surface portion of the cementitious core so that the grid profile mechanically interacts with the cementitious composition **26**. A polymer film **14** is then advanced to the cementitious core, such that the film roller **214** applies the polymer film to the surface portion of the cementitious core containing the scrim **12** so that the polymer film engages the scrim and facilitates the mechanical interaction between the grid profile of the scrim and the surface portion of the cementitious composition **26**. Alternatively, the scrim **12** and polymer film **14** may be advanced to the cementitious composition by other methods that may not incorporate the scrim roller **212** and/or the film roller **214**, respectively. After the scrim **12** and polymer film **14** have been applied to the cementitious composition, the cementitious core may be transferred away for additional operations such as advancing a second scrim and a second polymer film to a surface of the cementitious composition opposite the scrim **12** and polymer film **14** and/or cutting the cementitious composition into discrete cement boards. The polymer film **14** and the scrim **12** of **FIG. 7** are joined during the hardening of the cement board **120** by the hardened cementitious composition. Alternatively, the polymer film **14** may be joined to the scrim **12** concurrent with the advancing of the polymer film to the cementitious composition **26**.

To form the reinforced cement board **20** of **FIG. 3** and **FIG. 4**, a cementitious composition **26** is mixed using one or more compositions of varying moisture content. Non-limiting examples of cementitious compositions are polymer concrete, aluminous cement, Portland cement, gypsum cements, or mixtures thereof with or without aggregates or polymer binders. While in a relatively liquid state, the cementitious composition **26** is poured or is pressed through rollers to form a continuous board of approximately constant thickness and width. While in the relatively liquid state, the facing sheet **10** of **FIG. 2** is positioned proximate a surface portion of the cement board **20** and then applied to the cement board so that the scrim is mechanically integrated into the cementitious composition **26**. As shown in **FIG. 4**, the scrim **12** is applied to the cementitious composition **26** to such a depth that a cementitious composition **22** occupies the mesh opening **32** of the scrim **12**. The scrim **12** is mechanically integrated into the cementitious composition **26** by the cementitious composition **22** contacting a substantial surface area of the yarns **16** and **18** of the scrim, such that once the cementitious composition is hardened, the bond strength between the scrim and the cementitious composition is strong. The polymer film **14** of the facing sheet **10** facilitates the distribution of the cementitious composition **22** within the mesh opening **32** of the scrim.

The polymer film **14** may be joined to the scrim **12** either before the scrim is applied to the cementitious composition **26**, as shown in **FIG. 5** and **FIG. 6**, or after the scrim is applied to the cementitious composition but before the cementitious composition hardens, as shown in **FIG. 7**. Alternatively, the polymer film **14** may be joined to the scrim **12** concurrent with the application of the scrim to the cementitious composition such that the force to apply the scrim to the cementitious composition also joins the polymer film to the scrim. Regardless of the relative timing that the polymer film **14** is joined to the scrim **12**, the polymer film contacts the cementitious composition **22** that enters the mesh openings **32** of the scrim.

By contacting the cementitious composition **22**, the polymer film **14** prevents the cementitious composition from creating convex bulges within the mesh openings **32** and from creating meniscuses within the mesh openings. Convex bulges and meniscuses may each reduce the bond strength between the cementitious composition **22** and the scrim **12** thus reducing the structural strength the facing sheet **10** provides the cement board **20**. Furthermore, convex bulges and meniscuses can also create an undesirable surface quality for a cement board **20**. The polymer film **14** prevents convex bulges and meniscuses by breaking the surface tension of the cementitious composition **22,** thus allowing the cementitious composition to propagate along the grid profile of the scrim **12** and to remain in place while the cementitious composition hardens. Furthermore, the cementitious composition **24** may also propagate into the openings **34** of the polymer film **14** such that the openings are filled with cementitious composition, as shown in **FIG. 4**. Because the openings **34** of the polymer film **14** are small relative to the mesh openings **32** of the scrim **12**, any convex bulges or meniscuses that may appear in the cementitious composition **24** within the openings of the polymer film are of nominal size. Therefore, the outside surface of the polymer film **14** defines a generally smooth surface, as shown in **FIG. 4.**

The openings **34** of the polymer film **14** are sufficiently large to allow moisture to pass from the cementitious composition **26** of the core of the cement board **20** during the hardening process. This passage of moisture allows the cement board **20** to harden in less time than a cement board with a facing sheet that prevents or hinders the passage of moisture, thus providing for more timely and cost effective manufacture of cement boards.

As illustrated in **FIG. 4**, a second facing sheet **110** may also be applied to a surface portion of the cement board **20** opposite a first facing sheet **10**; however, the cement board may alternatively include no second facing sheet. The second facing sheet **112** of **FIG. 4** provides additional structural support for the cement board **20** and improves the surface properties of the cement board surface opposite the first facing sheet **10**. The second facing sheet **110** comprises a second scrim **112** and a second polymer film **114**. The second scrim **112** comprises a plurality of longitudinal yarns **118** and a plurality of transverse yarns **116** that are transverse to the longitudinal yarns. The second polymer film **114** may be formed by the same process and with the same material as the first polymer film **14**. The second facing sheet **110** may be applied to the cementitious composition **26** in a similar manner as the scrim **12** and polymer film **14** of the facing sheet **10**. Alternatively, the facing sheet **10** and the second facing sheet **110** may be applied to the same cementitious composition **26** by dissimilar methods, such as pouring the cementitious composition onto the second facing sheet and applying the first facing sheet to a surface portion opposite the second facing sheet, to describe one non-limiting example.

The cement board **20** of a given width and thickness is cut to length once the facing sheet **10** has been fully applied and the cement board has hardened a sufficient amount such that the cutting does not deform the cement board proximate the cut line. A representative size for a cement board **20** is a 4' x 8' x 7/16" board, though the board may be formed and cut to any size. Hardening of the cement board involves the passage of moisture from the cementitious composition **26** to the surrounding environment until the cementitious composition is rigid. The hardening process may be accelerated by the application of heat to the cement board **20**. Passage of moisture from the cement board **20** is possible through the edges defining the width of the cement board and the edges defining the length of the cement board, after cutting. Moisture passage is also possible through the polymer film openings **34** of the facing sheet **10** such that the cement board **20** hardens more quickly and more uniformly than if moisture passage was limited to the edges.

Many modifications and other embodiments of the invention set forth herein will come to mind to one skilled in the art to which the invention pertains having the benefit of the teachings presented in the foregoing descriptions and the associated drawings. Therefore, it is to be understood that the invention is not to be limited to the specific embodiments disclosed and that modifications and other embodiments are intended to be included within the scope of the appended claims. Although specific terms are employed herein, they are used in a generic and descriptive sense only and not for purposes of limitation.

## Claims

1. A facing sheet for an object comprising a hardened cementitious composition, the facing sheet comprising:
a scrim having a plurality of intersecting yarns defining an open mesh pattern, the scrim having an inner face and an outer face wherein the inner face of the scrim defines a grid profile for mechanical interaction with the cementitious composition; and
a polymer film joined with the outer face of the scrim, the polymer film having a repeating pattern of openings therein.

2. A facing sheet according to claim 1, wherein the openings in the polymer film are small relative to the mesh openings of the scrim.

3. A facing sheet according to claim 1 or 2, wherein the scrim has less than about 155,000 mesh openings per square meter.

4. A facing sheet according to any preceding claim, wherein the polymer film is a thermoplastic material or a thermoset polymer.

5. A facing sheet according to any preceding claim, wherein the polymer film is a gravure printed film.

6. A facing sheet according to any preceding claim, wherein the openings of the polymer film are sufficiently large to allow passage of moisture during the hardening of the cementitious composition.

7. A facing sheet according to any preceding claim, wherein the basis weight of the polymer film is between about 10 and 60 g/m2,

8. A facing sheet according to any preceding claim, wherein a distance between lines of the polymer film is between about 1 mm and 12 mm.

9. A cement board, comprising:
a cementitious core formed by a cementitious composition that hardens to define the core; and
a facing sheet that defines at least part of one face of the cement board, said facing sheet comprising;
a scrim having a plurality of intersecting yarns defining an open mesh pattern, the scrim having an inner face and an outer face wherein the inner face of the scrim defines a grid profile mechanically interacting with the cementitious composition of the core; and
a polymer film joined with the outer face of the scrim, the polymer film defining a repeating pattern of openings therein.

10. A method of manufacturing a facing sheet for an object comprising a hardened cementitious composition, comprising the steps of:
joining a plurality of intersecting yarns to create a scrim defining an open mesh pattern wherein the scrim includes an inner face defining a grid profile for mechanical interaction with the cementitious composition and an outer face opposite the inner face;
forming a polymer film such that the polymer film has a repeating pattern of openings therein; and
joining the polymer film to the outer face of the scrim such that the joined polymer film and scrim define the facing sheet.

11. A method according to claim 10, wherein the forming step is a gravure rolling process further comprising a step of gravure rolling heated polymer to create the polymer film.

12. A method according to claim 11, wherein the joining the polymer film and scrim step includes transferring the polymer film from the gravure rolling process to an intermediate surface and then transferring the polymer film from the intermediate surface to the outer face of the scrim.

13. A method of manufacturing an object comprising a reinforced cementitious composition, comprising the steps of:
joining a polymer film having a repeating pattern of openings to an outer face of a scrim having a plurality of intersecting yarns defining an open mesh pattern such that the joined polymer film and scrim define a facing sheet, wherein the scrim includes an inner face defining a grid profile for mechanical interaction with the cementitious composition;
applying the facing sheet to a cementitious composition such that the inner face of the scrim mechanically interacts with a surface portion of the cementitious composition; and hardening the cementitious composition.

14. A method according to claim 13, wherein the joining step includes forming the polymer film by a gravure rolling process and transferring the polymer film to an intermediate surface and then further transferring the polymer film from the intermediate surface to the outer face of the scrim.

15. A method of manufacturing an object comprising a reinforced cementitious composition, comprising the steps of:
forming a cementitious core from a cementitious composition that hardens to define the core;
advancing a scrim having a plurality of intersecting yarns defining an open mesh pattern, said scrim having an inner face and an outer face wherein the inner face of the scrim defines a grid profile, said scrim advancing step occurring such that the grid profile mechanically interacts with the cementitious composition before the cementitious composition is hardened;
advancing a polymer film having a repeating pattern of openings, said film advancing step occurring such that the film is brought against the outer face of the scrim; and hardening the cementitious composition.
